# NEUE EUROPÄISCHE PATENTSCHRIFT

(11) **EP 3 427 984 B2**
(45) Veröffentlichungstag und Bekanntmachung des Hinweises auf die Entscheidung über den Einspruch: **29.01.2025**
(45) Hinweis auf die Patenterteilung: 04.08.2021
(21) Anmeldenummer: 18177327.6
(22) Anmeldetag: 12.06.2018
(51) Int. Cl.: B60J 7/00

(54) **SCHUTZVORRICHTUNG FÜR EINEN FAHRZEUGINNENRAUM**
SAFETY DEVICE FOR A VEHICLE INTERIOR
DISPOSITIF DE PROTECTION D'HABITACLE DE VÉHICULE

(30) Priorität: 10.07.2017 DE 102017211784
(43) Veröffentlichungstag der Anmeldung: 16.01.2019
(73) Patentinhaber: BOS GmbH & Co. KG, 73760 Ostfildern (DE)
(72) Erfinder: Renz, Günter, 71254 Ditzingen (DE); Winter, Karl-Heinz, 71336 Waiblingen (DE)
(74) Vertreter: Patentanwälte Ruff, Wilhelm, Beier, Dauster & Partner mbB

(56) Entgegenhaltungen:
- EP-A1- 0 478 156
- EP-A1- 1 415 836
- DE-A1- 102006 017 538
- KR-B1- 101 564 012
- US-A1- 2009 195 034

## Beschreibung

### Beschreibung

Die Erfindung betrifft eine Schutzvorrichtung für einen Fahrzeuginnenraum mit einem flexiblen Flächengebilde, das zwischen unterschiedlichen Funktionsstellungen im Fahrzeuginnenraum längsverlagerbar ist, und das an gegenüberliegenden Seitenrändern mit jeweils einem Versteifungsband versehen ist, die in fahrzeugfesten Führungsspuren längsverlagerbar geführt sind, sowie mit einem Auszugprofil, das quer zur Längsverlagerungsrichtung des Flächengebildes erstreckt und mit einem in Auszugrichtung vorderen Stirnendbereich des Flächengebildes verbunden ist, wobei das Auszugprofil mittels jeweils eines Führungsglieds in den fahrzeugfesten Führungsspuren geführt ist, und wobei jedes Versteifungsband stirnseitig an jeweils einem Führungsglied befestigt ist.

Aus der DE 10 2006 017 538 A1 ist eine Schutzvorrichtung in Form einer Rolloanordnung bekannt, bei der eine Rollobahn auf gegenüberliegenden Längsseiten mit jeweils einem Versteifungsband versehen ist. Das Versteifungsband dient zur Führung in jeweils einer fahrzeugfesten Führungsspur. Stirnseitig des Versteifungsbandes ist jeweils ein Mitnehmer vorgesehen, der fest mit dem Versteifungsband verbunden ist und mit einer Rollokupplung gekoppelt werden kann. Hierzu weist der Mitnehmer zwei Profilierungsabschnitte auf, die formschlüssig in zwei komplementäre Profilierungsaufnahmen der Rollokupplung eingreifen, um mit der Rollokupplung entlang der Führungsspur mitgenommen werden zu können.

Eine weitere Schutzvorrichtung in Form einer Beschattungsvorrichtung für einen Glasdachbereich eines Fahrzeuginnenraums eines Personenkraftwagens ist allgemein bekannt. Ein flexibles Flächengebilde in Form einer Beschattungsbahn ist auf einer Wickelwelle auf- und abwickelbar gehalten. Die Beschattungsbahn ist an ihren gegenüberliegenden Seitenrändern mit jeweils einem Versteifungsband versehen. Die Versteifungsbänder sind in dachfesten Führungsprofilierungen längsverschiebbar geführt. Jedes Versteifungsband ist zudem stirnseitig an einem Führungsglied befestigt, das in der jeweiligen dachfesten Führungsprofilierung längsverschiebbar geführt ist. An den Führungsgliedern ist ein Auszugprofil angelenkt, das sich quer zur Längsverlagerungsrichtung der Beschattungsbahn erstreckt und stirnendseitig an der Beschattungsbahn befestigt ist.

Aufgabe der Erfindung ist es, eine Schutzvorrichtung der eingangs genannten Art zu schaffen, die eine verbesserte Verbindung der Versteifungsbänder mit den Führungsgliedern ermöglicht.

Diese Aufgabe wird durch die Merkmale des Anspruchs 1 gelöst. Die wenigstens drei in Längsverlagerungsrichtung zueinander beabstandeten Profilierungsabschnitte ermöglichen eine verbesserte Verbindung zwischen dem jeweiligen Führungsglied und dem Stirnendbereich des Versteifungsbands. Ein unbeabsichtigtes Lösen des Versteifungsbands vom Führungsglied wird hierdurch vermieden. Die erfindungsgemäße Lösung ermöglicht eine gegenüber dem Stand der Technik verbesserte und verschleißarme Befestigung der Versteifungsbänder. Dadurch ist eine erhöhte Funktionssicherheit der Schutzvorrichtung gegeben. Die erfindungsgemäße Schutzvorrichtung kann zur Beschattung transparenter Flächen des Fahrzeuginnenraums wie insbesondere einem transparenten Glasdachbereich, einer Heckscheibe, von Seitenscheiben oder Ähnlichem vorgesehen sein. Alternativ kann die erfindungsgemäße Schutzvorrichtung zum Abtrennen und/oder Abdecken eines Laderaums des Fahrzeuginnenraums vorgesehen sein. Die in Längsverlagerungsrichtung hintereinander vorgesehenen Aufnahmen können als zumindest teilweise geschlossene Vertiefungen Seiten oder als zu gegenüberliegenden offene Durchtritte gestaltet sein. Falls sie als Vertiefungen gestaltet sind, können diese in Form von Einprägungen oder Ähnlichem ausgebildet sein. Die Profilierungsabschnitte sind vorzugsweise bezüglich ihres Querschnitts komplementär zu entsprechenden freien Querschnitten der Aufnahmen ausgeführt, um ein zumindest weitgehend spielfreies Einstecken der Profilierungsabschnitte in die Aufnahmen zu ermöglichen.

Erfindungsgemäß sind die Profilierungsabschnitte an einem Halteteil angeordnet, das mit dem Führungsglied verbunden ist. Die Profilierungsabschnitte sind vorzugsweise einstückig an dem Halteteil angeformt. Das Halteteil ist vorteilhaft aus Kunststoff hergestellt. Die Profilierungsabschnitte ragen zu einer Seite von dem Halteteil ab. Beim Einsatz der Ausgestaltung für eine Schutzvorrichtung zur Beschattung eines Glasdachbereichs ist das Halteteil vorzugsweise jeweils im Bereich einer Unterseite des jeweiligen Versteifungsbands positioniert und die Profilierungsabschnitte ragen durch die Aufnahmen des Versteifungsbands hindurch nach oben.

Erfindungsgemäß sind die Profilierungsabschnitte stiftförmig ausgeführt.

Erfindungsgemäß sind die Aufnahmen des Versteifungsbands als Durchtritte gestaltet, die zu den stiftförmigen Profilierungsabschnitten komplementäre Durchtrittsquerschnitte aufweisen.

In weiterer Ausgestaltung der Erfindung weisen die stiftförmigen Profilierungsabschnitte und die Durchtritte jeweils kreisförmige Querschnitte auf. Die kreisförmigen Querschnitte sind einfach herstellbar und ermöglichen eine zumindest weitgehend spielfreie Kontaktierung zwischen Profilierungsabschnitten und Durchtritten. In vorteilhafter Weise sind die stiftförmigen Profilierungsabschnitte in Längsverlagerungsrichtung in einer Reihe hintereinander angeordnet. Die Profilierungsabschnitte erstrecken sich vorteilhaft in einer gemeinsamen Ebene, die orthogonal und längs einer Oberfläche des jeweiligen Versteifungsbands verläuft.

In weiterer Ausgestaltung der Erfindung weist das Halteteil einen Verbindungsabschnitt zur Sicherung des Halteteils an dem Führungsglied auf. Das Halteteil stellt ein vom jeweiligen Führungsglied getrenntes Bauteil dar. Vorzugsweise werden das Halteteil und der jeweilige Stirnendbereich des Versteifungsbands in einem Vormontageschritt miteinander verbunden, bevor anschließend das Halteteil mit dem Führungsglied verbunden wird. Der Verbindungsabschnitt ist vorzugsweise derart ausgeführt, dass ein werkzeugloses Verbinden des Halteteils mit dem Führungsglied ermöglicht ist.

In weiterer Ausgestaltung der Erfindung ist das Führungsglied mit einer Aufnahmeprofilierung zur Befestigung des Verbindungsabschnitts an dem Führungsglied versehen. In vorteilhafter Ausgestaltung ist die Aufnahmeprofilierung als Stecknut gestaltet, und der Verbindungsabschnitt weist eine zu der Stecknut komplementäre Steckkontur auf. Vorteilhaft ist die Stecknut zu einer in Längsverlagerungsrichtung gerichteten Stirnseite des Führungsglieds hin offen. Dadurch kann der Verbindungsabschnitt des Halteteils über die offene Stirnseite in die Stecknut eingesteckt werden. Vorteilhaft erstreckt sich demzufolge die Stecknut in Längsverlagerungsrichtung. Für eine Montage der Schutzvorrichtung wird zunächst das Halteteil mit den Durchtritten des Versteifungsbands formschlüssig verbunden und anschließend wird das Halteteil mit seinem Verbindungsabschnitt in die Aufnahmeprofilierung des Führungsglieds eingesteckt.

In weiterer Ausgestaltung der Erfindung ist wenigstens ein elastisch nachgiebiges Rastelement an dem Verbindungsabschnitt oder der Aufnahmeprofilierung vorgesehen, das den Verbindungsabschnitt in eingesteckter Endstellung in der Stecknut formschlüssig sichert. Vorzugsweise weist die Stecknut in Einsteckrichtung einen Endanschlag auf, an dem der Verbindungsabschnitt des Halteteils beim Einstecken in die Stecknut anschlägt. Das elastisch nachgiebige Rastelement ist derart gestaltet, dass es in seine Rastposition einrastet, sobald der Verbindungsabschnitt seine eingesteckte Endstellung in der Stecknut erreicht hat. Die Stecknut weist hierzu vorzugsweise eine zu dem Rastelement komplementäre Rastprofilierung auf, in die das elastisch nachgiebige Rastelement in der Endstellung des Verbindungsabschnitts einrastet.

Erfindungsgemäß weist das Halteteil zwei Teilbereiche auf, die in montiertem Zustand das Versteifungsband beidseitig flankieren. Beide Teilbereiche sind vorzugsweise aus Kunststoff hergestellt. Das Versteifungsband kann als flaches Stahlband oder als faserverstärktes Kunststoffband, insbesondere als Teflonband, ausgeführt sein.

Erfindungsgemäß sind die Teilbereiche mittels eines Scharniers miteinander gelenkig verbunden. Das Scharnier definiert eine Schwenkachse, die quer zur Längsverlagerungsrichtung des Versteifungsbands, aber in oder parallel zu einer Ebene des Versteifungsbands, verläuft. Vorzugsweise ist das Scharnier als Filmscharnier gestaltet.

In weiterer Ausgestaltung der Erfindung sind die stiftförmigen Profilierungsabschnitte und die Steckaufnahmen in einer gemeinsamen Ebene gleichsinnig gekrümmt. Die gemeinsame Ebene wird vorzugsweise durch eine Radialebene der Schwenkachse des Scharniers gebildet.

In weiterer Ausgestaltung der Erfindung sind die Profilierungsabschnitte und die Steckaufnahmen kreisbogenförmig gekrümmt entsprechend von unterschiedlichen Kreisbögen, die in der gemeinsamen Ebene einen gemeinsamen Mittelpunkt, nämlich eine Schwenkachse des Scharniers, aufweisen, und deren Radien den Abständen der jeweiligen Profilierungsabschnitte bzw. Steckaufnahmen zu dem Mittelpunkt entsprechen. Dadurch ist bei einem Verschwenken der beiden Teilbereiche des Halteteils gegeneinander gewährleistet, dass die Profilierungsabschnitte exakt bei weitgehend gleichbleibender Belastung in die Steckaufnahmen eintauchen. In vorteilhafter Weise können die Profilierungsabschnitte und die komplementären Steckaufnahmen endseitig mit Rastprofilierungen versehen sein, um ein Einrasten und demzufolge ein Sichern der Profilierungsabschnitte in den Steckaufnahmen in der zusammengefügten Endstellung der beiden Teilbereiche des Halteteils zu ermöglichen.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt einen Ausschnitt einer Ausführungsform einer erfindungsgemäßen Schutzvorrichtung in Form eines Beschattungssystems für einen Glasdachbereich eines Personenkraftwagens,
- Fig. 2: einen Ausschnitt II der Darstellung nach Fig. 1, jedoch vergrößert,
- Fig. 3: in perspektivischer Darstellung einen Teilbereich der Schutzvorrichtung nach den Fig. 1 und 2,
- Fig. 4: in vergrößerter Darstellung einen Teilbereich der Schutzvorrichtung nach Fig. 3,
- Fig. 5: einen ersten Montageschritt zur Verbindung eines Führungsglieds mit einem flexiblen Flächengebilde gemäß Fig. 4,
- Fig. 6: einen weiteren Montageschritt anschließend an Fig. 5,
- Fig. 7: einen weiteren Montageschritt anschließend an Fig. 6,
- Fig. 8: eine Längsschnittdarstellung der Schutzvorrichtung gemäß Fig. 3,
- Fig. 9: schematisch eine Frontansicht eines Führungsglieds der Schutzvorrichtung nach Fig. 8 und
- Fig. 10: einen Schnitt entlang der Schnittlinie X-X der Darstellung nach Fig. 9.

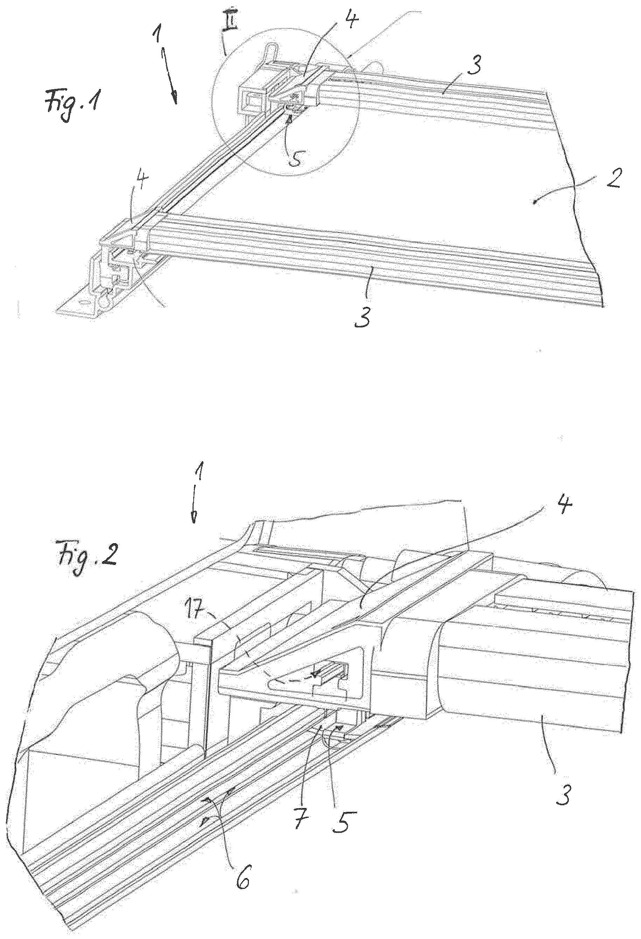

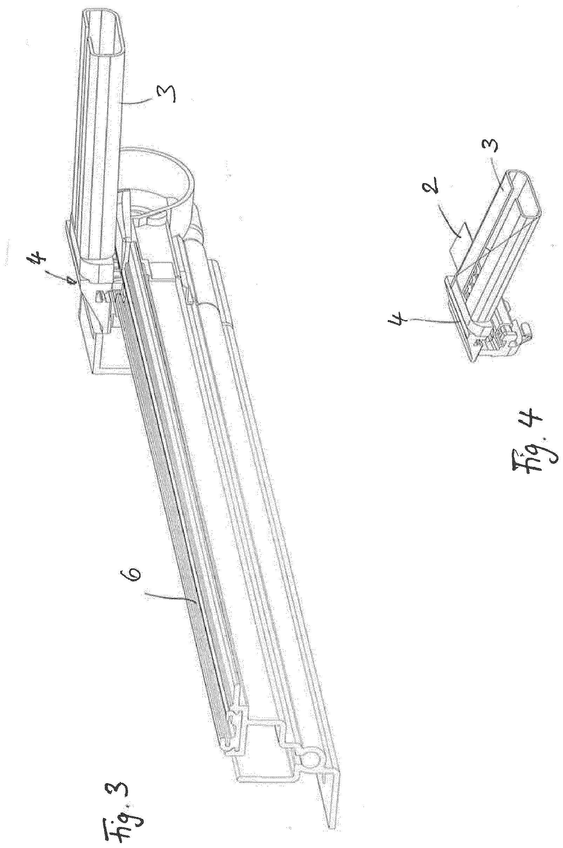

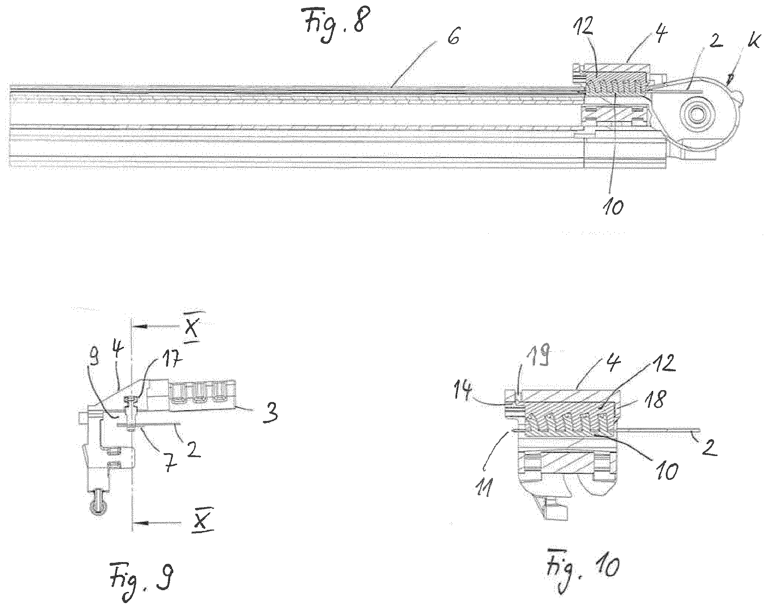

Eine Schutzvorrichtung 1 nach den Fig. 1 bis 10 ist als Beschattungsvorrichtung für einen Glasdachbereich eines Personenkraftwagens vorgesehen. Die Beschattungsvorrichtung ist im Fahrzeuginnenraum unterhalb des Glasdachbereichs vorgesehen und weist ein flexibles Flächengebilde 2 auf, das auch als Beschattungsbahn bezeichnet wird. Das flexible Flächengebilde 2 ist auf einer Wickelwelle auf- und abwickelbar gehalten, die in einem dachfest montierten Kassettengehäuse K (Fig. 8) drehbar gelagert ist. Das flexible Flächengebilde 2 ist an seinen gegenüberliegenden Seitenrändern mit jeweils einem Versteifungsband 7 versehen, das in jeweils einer dachfesten und damit fahrzeugfesten Führungsspur in Form einer Führungsschiene 6 längsverschiebbar geführt ist. Anhand der Fig. 1 bis 10 ist lediglich eine der dachfesten Führungsschienen 6 gezeigt. Eine gegenüberliegende Seite der Schutzvorrichtung 1 einschließlich der Führungsschiene 6 ist relativ zu einer vertikalen Mittellängsachse spiegelsymmetrisch, im Übrigen jedoch identisch gestaltet. Zur Vermeidung von Wiederholungen wird nachfolgend lediglich die eine Seite anhand der Zeichnungen gemäß den Fig. 1 bis 10 beschrieben. Für die gegenüberliegende Seite gilt das Gesagte in gleicher Weise.

Das flexible Flächengebilde 2 ist längs der Führungsschienen 6 verlagerbar zwischen einer auf die Wickelwelle aufgewickelten Ruhestellung, d.h. einer ersten Funktionsstellung, und einer bis zu einem Endbereich der Führungsschienen 6 ausgezogenen zweiten Funktionsstellung. Die beiden Versteifungsbänder 7, die den gegenüberliegenden Seitenrändern des flexiblen Flächengebildes 2 zugeordnet und in den fahrzeugfesten Führungsschienen 6 geführt sind, dienen dazu, auf das flexible Flächengebilde 2 eine permanente Querspannung quer zur Längsverlagerungsrichtung auszuüben. Dadurch wird ein Durchhängen des flexiblen Flächengebildes 2 vermieden. Das flexible Flächengebilde 2 ist an seinem in Auszugrichtung vorderen Stirnendbereich mit einem formstabilen Auszugprofil 3 verbunden, das sich in Querrichtung über die Breite des Flächengebildes 2 erstreckt. Anhand der Fig. 1 ist das Auszugprofil 3 in zwei unterschiedlichen Stellungen dargestellt. Das Auszugprofil 3 ist an seinen gegenüberliegenden Stirnenden mit jeweils einem Führungsglied 4 gekoppelt, das in der jeweiligen Führungsschiene 6 längsverschiebbar geführt ist. Beim dargestellten Ausführungsbeispiel ist das Führungsglied 4 mittels eines Antriebssystems in der jeweiligen Führungsschiene 6 längsverlagerbar. In gleicher Weise kann eine Längsverlagerung des Auszugprofils 3 und damit der Führungsglieder 4 jedoch auch manuell durch entsprechendes Ergreifen des Auszugprofils 3 und Verschieben längs der Führungsschienen 6 erfolgen.

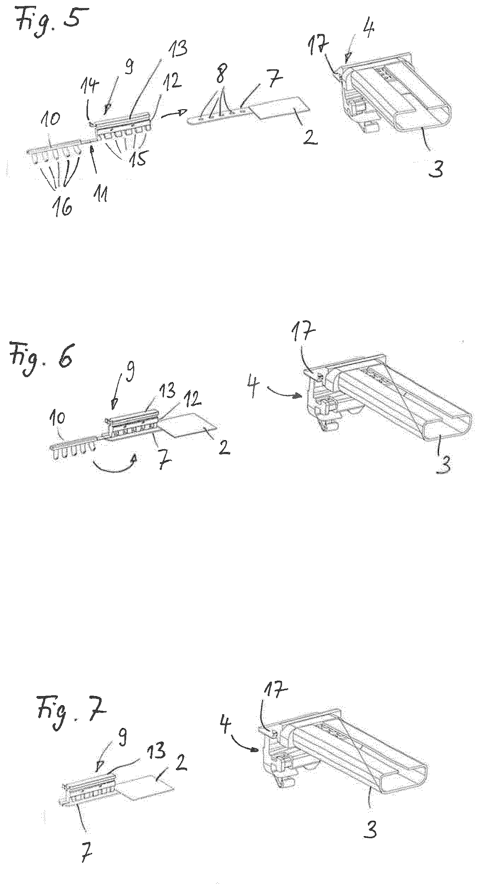

Das jeweilige Versteifungsband 7 ist mit dem Führungsglied 4 fest verbunden, um von dem Führungsglied 4 mitgenommen werden zu können. Das Versteifungsband 7 ist als Flachband ausgeführt und aus Stahl oder einem faserverstärkten Kunststoffstreifen hergestellt. Das Versteifungsband 7 wird im Bereich das Kassettengehäuses K gemeinsam mit dem flexiblen Flächengebilde auf die Wickelwelle aufgewickelt und von dieser abgezogen. Das Versteifungsband 7 ragt an seinem in Auszugrichtung vorderen Stirnendbereich über das flexible Flächengebilde 2 hinaus (siehe Fig. 5 bis 7). Das Versteifungsband 7 ist in diesem Bereich gelocht durch insgesamt fünf Löcher, die Durchtritte 8 im Sinne der Erfindung darstellen. Die Durchtritte 8 sind identisch zueinander gestaltet und in einer Reihe in gleichmäßigen Abständen hintereinander angeordnet. Alle Durchtritte 8 sind kreisförmig ausgeführt und vorzugsweise durch Stanzen hergestellt. Der vordere Stirnendbereich des Versteifungsbands 7 wird in nachfolgend näher beschriebener Weise mit einem Halteteil 9 verbunden, das anschließend in eine Aufnahmeprofilierung 17 des Führungsglieds 4 eingefügt wird. Das Halteteil 9 besteht aus einem oberen Teilbereich 12 und einem unteren Teilbereich 10, die über ein Filmscharnier 11 schwenkbeweglich miteinander verbunden sind. Eine durch das Filmscharnier 11 gebildete Schwenkachse erstreckt sich parallel zu einer Quererstreckung des Auszugprofils 3. Der untere Teilbereich 10 ist mit insgesamt fünf stiftförmigen Profilierungsabschnitten 16 versehen, die zu einer gemeinsamen Seite hin von dem leistenförmigen Teilbereich 10 aus abragen. In der Darstellung gemäß den Fig. 5 und 6 ragen die stiftförmigen Profilierungsabschnitte 16 nach unten ab.

Der obere Teilbereich 12 weist komplementär zu den stiftförmigen Profilierungsabschnitten 16 fünf Steckaufnahmen 15 auf, die zumindest teilweise komplementäre Steckquerschnitte zu den Querschnitten der stiftförmigen Profilierungsabschnitte 16 aufweisen.

Wie anhand der Fig. 5 bis 7 erkennbar ist, wird zur Verbindung des Halteteils 9 mit dem Versteifungsband 7 zunächst der obere Haltebereich 12 auf den vorderen Stirnendbereich des Versteifungsbands 7 aufgesetzt, bis die Steckaufnahmen 15 mit den Durchtritten 8 fluchten. Das Filmscharnier 11 befindet sich in dieser Position (Fig. 6) etwa auf Höhe einer vorderen Stirnkante des Versteifungsbands 7. Anschließend wird der untere Teilbereich 10, der sich noch zungenartig von dem oberen Teilbereich 12 aus nach vorne erstreckt, gemäß der Pfeildarstellung in Fig. 6 nach unten verschwenkt, wodurch nacheinander die fünf stiftförmigen Profilierungsabschnitte 16 durch die hintereinander angeordneten Durchtritte 8 hindurchtauchen und in die Steckaufnahmen 15 hineintauchen.

Anhand der Fig. 10 ist erkennbar, dass sowohl die Steckaufnahmen 15 als auch die stiftförmigen Profilierungsabschnitte 16 in einer Radialebene zur Schwenkachse, die durch das Filmscharnier 11 gebildet ist, erstreckt sind. Zudem ist anhand der Fig. 10 erkennbar, dass alle stiftförmigen Profilierungsabschnitte 16 und die zugeordneten Steckaufnahmen 15 kreisbogenförmig gekrümmt sind. Dabei weisen die Kreisbögen unterschiedliche Radien auf, die den unterschiedlichen Abständen der einzelnen stiftförmigen Profilierungsabschnitte 16 zu der durch das Filmscharnier 11 gebildeten Schwenkachse entsprechen. Demzufolge nimmt die kreisbogenförmige Krümmung der stiftförmigen Profilierungsabschnitte und der zugeordneten Steckaufnahmen im Verhältnis zu dem Abstand ab, den die einzelnen Profilierungsabschnitte und Steckaufnahmen zur Schwenkachse des Filmscharniers 11 haben. Die Zunge, die das Filmscharnier 11 bildet, erstreckt sich in fertig montiertem Zustand des Halteteils 9 (siehe Fig. 7 und 10) um die vordere Stirnkante des Versteifungsbands 7 herum. Die stiftförmigen Profilierungsabschnitte 16 sind entweder rein kraftschlüssig in den Steckaufnahmen 15 gehalten, oder den Profilierungsabschnitten 16 und den komplementären Steckaufnahmen 15 sind zusätzliche, nicht näher dargestellte Rastprofilierungen zugeordnet, die die eingesteckte Endstellung von Profilierungsabschnitten 16 und Steckaufnahmen 15 sichern. Da zudem die Profilierungsabschnitte 16 formschlüssig durch die Durchtritte 8 des Versteifungsbands 7 hindurchgesteckt sind, ist das Halteteil 9 fest mit dem Versteifungsband 7 verbunden.

Das Halteteil 9 ist im oberen Teilbereich 12 zusätzlich mit einem Verbindungsabschnitt 13 versehen, der als im Wesentlichen T-förmiges Profil gestaltet ist. Das Führungsglied 4 weist komplementär hierzu eine Aufnahmeprofilierung 17 auf, die mit einer komplementär T-förmigen Stecknut versehen ist, die in Auszugrichtung nach vorne offen ist. Rückseitig ist die Aufnahmeprofilierung 17 mit einer als Endanschlag dienenden Rückwand 18 versehen. Das Halteteil 9 wird mit seinem Verbindungsabschnitt 13 in die als Stecknut gestaltete Aufnahmeprofilierung 17 des Führungsglieds 4 parallel zur Erstreckungsrichtung des Versteifungsbands 7 eingeschoben, bis der Verbindungsabschnitt 13 stirnseitig an der Rückwand 18 zur Anlage kommt. Der Verbindungsabschnitt 13 ist zudem mit einer elastisch nachgiebigen Rastnase 14 versehen, die in der eingesteckten Endstellung des Verbindungsabschnitts 13 in eine Rastnut 19 des Führungsglieds 4 einrastet (siehe insbesondere Fig. 10). Damit ist das Halteteil 9 zum einen kraftschlüssig und spielfrei in das Führungsglied 4 eingesteckt und zusätzlich über die Rastnase 14 formschlüssig in der Rastnut 19 des Führungsglieds 4 gesichert. Die formschlüssige Stützung in entgegengesetzter Richtung wird durch die Rückwand 18 übernommen.

Eine Längsverlagerung des Führungsglieds 4 führt demzufolge zwangsläufig zu einer entsprechenden Längsverlagerung des Versteifungsbands 7 und demzufolge zu einer Längsverlagerung des flexiblen Flächengebildes 2.

## Patentansprüche

1. Schutzvorrichtung (1) für einen Fahrzeuginnenraum mit einem flexiblen Flächengebilde (2), das zwischen unterschiedlichen Funktionsstellungen im Fahrzeuginnenraum längsverlagerbar ist, und das an gegenüberliegenden Seitenrändern mit jeweils einem Versteifungsband (7) versehen ist, die in fahrzeugfesten Führungsspuren längsverlagerbar geführt sind, **gekennzeichnet durch** einen Auszugprofil (3), das quer zur Längsverlagerungsrichtung des Flächengebildes (2) erstreckt und mit einem in Auszugrichtung vorderen Stirnendbereich des Flächengebildes (2) verbunden ist, wobei das Auszugprofil (3) mittels jeweils eines Führungsglieds (4) in den fahrzeugfesten Führungsspuren geführt ist, und wobei jedes Versteifungsband (7) stirnseitig an dem jeweils einen Führungsglied (4) befestigt ist, wobei jedes Versteifungsband (7) wenigstens drei in Längsverlagerungsrichtung hintereinander vorgesehene Aufnahmen (8) aufweist, und dass dem Führungsglied (4) wenigstens drei in Längsverlagerungsrichtung zueinander beabstandete Profilierungsabschnitte (16) zugeordnet sind, die quer zur Längsverlagerungsrichtung formschlüssig in die Aufnahmen (8) hineinragen, dass die Profilierungsabschnitte stiftförmig ausgeführt und an einem Halteteil (9) angeordnet sind, das mit dem Führungsglied (4) verbunden ist, dass das Halteteil (9) zwei Teilbereiche (10, 12) aufweist, die in montiertem Zustand das Versteifungsband (7) beidseitig flankieren und
dass ein Teilbereich (10) mit den stiftförmigen Profilierungsabschnitten (16) und der gegenüberliegende Teilbereich (12) mit Steckaufnahmen versehen ist, die kraft- und/oder formschlüssig auf die stiftförmigen Profilierungsabschnitte abgestimmt sind, dass die Aufnahmen des Versteifungsbands als Durchtritte (8) gestaltet sind, die zu den stiftförmigen Profilierungsabschnitten (16) komplementäre Durchtrittsquerschnitte aufweisen und dass die Teilbereiche (10, 12) mittels eines Scharniers miteinander gelenkig verbunden sind, wobei das Scharnier eine Schwenkachse definiert, die quer zu einer Längsverlagerungsrichtung des Versteifungsbandes 7, aber in oder parallel zu einer Ebene des Versteifungsbandes 7, verläuft.

2. Schutzvorrichtung nach Anspruch 1, **dadurch gekennzeichnet, dass** die stiftförmigen Profilierungsabschnitte (16) und die Durchtritte (8) jeweils kreisförmige Querschnitte aufweisen.

3. Schutzvorrichtung nach einem der vorhergehenden Ansprüche, **dadurch gekennzeichnet, dass** die stiftförmigen Profilierungsabschnitte (16) in Längsverlagerungsrichtung in einer Reihe hintereinander angeordnet sind.

4. Schutzvorrichtung nach einem der vorhergehenden Ansprüche, **dadurch gekennzeichnet, dass** das Halteteil (9) einen Verbindungsabschnitt (13) zur Sicherung des Halteteils (9) an dem Führungsglied (4) aufweist.

5. Schutzvorrichtung nach Anspruch 4, **dadurch gekennzeichnet, dass** das Führungsglied (4) mit einer Aufnahmeprofilierung (17) zur Befestigung des Verbindungsabschnitts (13) an dem Führungsglied (4) versehen ist.

6. Schutzvorrichtung nach Anspruch 5, **dadurch gekennzeichnet, dass** die Aufnahmeprofilierung als Stecknut (17) gestaltet ist, und dass der Verbindungsabschnitt (13) eine zu der Stecknut (17) komplementäre Steckkontur aufweist.

7. Schutzvorrichtung nach einem der Ansprüche 4 bis 6, **dadurch gekennzeichnet, dass** wenigstens ein elastisch nachgiebiges Rastelement (14) an dem Verbindungsabschnitt (13) oder der Aufnahmeprofilierung vorgesehen ist, das den Verbindungsabschnitt (13) in eingesteckter Endstellung in der Aufnahmeprofilierung formschlüssig sichert.

8. Schutzvorrichtung nach Anspruch 1, **dadurch gekennzeichnet, dass** das Scharnier als Filmscharnier (11) gestaltet ist.

9. Schutzvorrichtung nach Anspruch 1, **dadurch gekennzeichnet, dass** die stiftförmigen Profilierungsabschnitte (16) und die Steckaufnahmen (15) in einer gemeinsamen Ebene gleichsinnig gekrümmt sind.

10. Schutzvorrichtung nach Anspruch 9, **dadurch gekennzeichnet, dass** die Profilierungsabschnitte (16) und die Steckaufnahmen (15) kreisbogenförmig gekrümmt sind entsprechend von unterschiedlichen Kreisbögen, die in der gemeinsamen Ebene einen gemeinsamen Mittelpunkt, nämlich eine Schwenkachse des Scharniers, aufweisen und deren Radien den Abständen der jeweiligen Profilierungsabschnitte bzw. Steckaufnahmen zu dem Mittelpunkt entsprechen.

## Claims

1. A protective device (1) for a vehicle interior, with a flexible fabric (2) which is longitudinally displaceable between different functional positions in the vehicle interior and which is provided on each opposite side edge with a stiffening strip (7) which is guided in a longitudinally displaceable manner in vehicle-mounted guide tracks, **characterized by** a pull-out profile (3) which extends transversely to the longitudinal displacement direction of the fabric (2) and is connected to an end region of the fabric (2) that is at the front in the pull-out direction; wherein the pull-out profile (3) is guided by means of one guide member (4) respectively in the vehicle-mounted guide tracks and wherein each stiffening strip (7) is fastened on the end side to the one guide member (4) respectively; wherein each stiffening strip (7) has at least three receptacles (8) which are provided one behind another in the longitudinal displacement direction; and in that the guide member (4) is assigned at least three profiling sections (16) which are spaced apart from one another in the longitudinal displacement direction and project in a positive manner into the receptacles (8) transversely to the longitudinal displacement direction; in that the profiling sections are of pin-shaped design and are arranged on a holding part (9) which is connected to the guide member (4); in that the holding part (9) has two partial regions (10, 12) which, in the fitted state, flank the stiffening strip (7) on both sides; and in
that one partial region (10) is provided with the pin-shaped profiling sections (16) and the opposite partial region (12) is provided with plug-in receptacles which are non-positively and/or positively matched to the pin-shaped profiling sections; in that the receptacles of the stiffening strip are configured as passages (8) which have passage cross sections complementary to the pin-shaped profiling sections (16); and in that the partial regions (10, 12) are pivotably connected to one another by means of a hinge, wherein said hinge defines a swivel axis that extends transversely to a longitudinal displacement direction of the stiffening strip 7, but in or parallel to a plane of said stiffening strip 7.

2. The protective device according to claim 1, **characterized in that** the pin-shaped profiling sections (16) and the passages (8) each have circular cross sections.

3. The protective device according to any of the preceding claims, **characterized in that** the pin-shaped profiling sections (16) are arranged in a row one behind another in the longitudinal displacement direction.

4. The protective device according to any of the preceding claims, **characterized in that** the holding part (9) has a connecting section (13) for securing the holding part (9) on the guide member (4).

5. The protective device according to claim 4, **characterized in that** the guide member (4) is provided with a receiving profile (17) for fastening the connecting section (13) to the guide member (4).

6. The protective device according to claim 5, **characterized in that** the receiving profile is configured as a plug-in groove (17) and **in that** the connecting section (13) has a plug-in contour which is complementary to the plug-in groove (17).

7. The protective device according to any of claims 4 to 6, **characterized in that** at least one elastically resilient latching element (14) is provided on the connecting section (13) or the receiving profile and positively secures the connecting section (13) inside the receiving profile in the plugged-in end position.

8. The protective device according to claim 1, **characterized in that** the hinge is configured as a film hinge (11).

9. The protective device according to claim 1, **characterized in that** the pin-shaped profiling sections (16) and the plug-in receptacles (15) are curved in the same direction in a common plane.

10. The protective device according to claim 9, **characterized in that** the profiling sections (16) and the plug-in receptacles (15) are curved in the shape of a circular arc in correspondence to different circular arcs, which have a common center point, namely a pivot axis of the hinge, in the common plane and the radii of which correspond to the distances of the respective profiling sections or plug-in receptacles from the center point.

## Revendications

1. Dispositif de protection (1) pour un habitacle de véhicule avec une structure plate flexible (2), qui est déplaçable sur la longueur entre des positions fonctionnelles différentes dans l'habitacle de véhicule, et qui est dotée d'une bande de renfort (7) respective sur chacun des bords latéraux opposés, lesdites bandes étant déplaçables sur la longueur et guidées dans des voies de guidage fixées au véhicule, **caractérisé par** un profilé d'extension (3) s'étendant transversalement par rapport à la direction de déplacement longitudinal de la structure plate (2) et relié à une région d'extrémité frontale de la structure plate (2), avant dans la direction d'extension, sachant que le profilé d'extension (3) est guidé par le biais de respectivement un membre de guidage (4) dans les voies de guidage fixées au véhicule, et sachant que chaque bande de renfort (7) est fixée côté frontal sur ledit respectivement un membre de guidage (4), sachant que chaque bande de renfort (7) présente au moins trois logements (8) agencés l'un derrière l'autre dans la direction de déplacement longitudinal, et en ce qu'au moins trois sections de profilage (16) espacées l'une de l'autre dans la direction de déplacement longitudinal sont associées au membre de guidage (4), lesdites sections faisant saillie dans les logements (8) transversalement par rapport à la direction de déplacement longitudinal par complémentarité de forme, en ce que les sections de profilage sont configurées sous forme de pointe et disposées sur une partie de retenue (9) qui est reliée au membre de guidage (4), en ce que la partie de retenue (9) présente deux sous-parties (10, 12) encadrant la bande de renfort (7) des deux côtés à l'état monté, et
en ce qu'une sous-partie (10) est dotée de sections de profilage (16) sous forme de pointe et que la sous-partie (12) opposée est dotée de logements d'enfichage, coordonnés avec les sections de profilage sous forme de pointe par complémentarité de force et/ou de forme, en ce que les logements de la bande de renfort sont conçus sous forme de passages (8) qui présentent des sections de passage complémentaires par rapport aux sections de profilage (16) en forme de pointe et en ce que les sous-parties (10, 12) sont reliées ensemble de manière articulée au moyen d'une charnière, sachant que la charnière définit un axe de pivotement qui s'étend transversalement à une direction de déplacement longitudinal de la bande de renfort 7 mais dans ou parallèlement à un plan de la bande de renfort 7.

2. Dispositif de protection selon la revendication 1, **caractérisé en ce que** les sections de profilage (16) sous forme de pointe et les passages (8) présentent respectivement des sections transversales circulaires.

3. Dispositif de protection selon l'une quelconque des revendications précédentes, **caractérisé en ce que** les sections de profilage (16) sous forme de pointe sont disposées l'une derrière l'autre en ligne dans la direction de déplacement longitudinal.

4. Dispositif de protection selon l'une quelconque des revendications précédentes, **caractérisé en ce que** la partie de retenue (9) présente une section de raccord (13) pour attacher la partie de retenue (9) sur le membre de guidage (4).

5. Dispositif de protection selon la revendication 4, **caractérisé en ce que** le membre de guidage (4) est doté d'un profilage de logement (17) pour fixer la section de raccord (13) sur le membre de guidage (4).

6. Dispositif de protection selon la revendication 5, **caractérisé en ce que** le profilage de logement est configuré sous forme de rainure d'enfichage (17), et **en ce que** la section de raccord (13) présente un contour d'enfichage complémentaire par rapport à la rainure d'enfichage (17).

7. Dispositif de protection selon l'une quelconque des revendications 4 à 6, **caractérisé en ce que** sur la section de raccord (13) ou sur le profilage de logement est prévu au moins un élément d'encliquetage (14) élastiquement résilient, ledit élément d'encliquetage attachant la section de raccord (13) enfichée à la position finale, dans le profilage de logement par complémentarité de forme.

8. Dispositif de protection selon la revendication 1, **caractérisé en ce que** la charnière est configurée sous forme de charnière-film (11).

9. Dispositif de protection selon la revendication 1, **caractérisé en ce que** les sections de profilage sous forme de pointe (16) et les logements d'enfichage (15) présentent une courbure uniforme dans un plan commun.

10. Dispositif de protection selon la revendication 9, **caractérisé en ce que** les sections de profilage (16) et les logements d'enfichage (15) présentent une courbure en arc de cercle correspondant à des arcs de cercle différents, lesdits arcs de cercle présentant un point central commun dans le plan commun, à savoir un axe de pivotement de la charnière, et les rayons desdits arcs de cercle correspondant à des distances des sections de profilage ou logements d'enfichage respectifs par rapport au point central.
